# EUROPEAN PATENT SPECIFICATION

(11) **EP 1 098 154 B1**
(45) Date of publication and mention of the grant of the patent: **16.10.2002**
(21) Application number: 99500203.7
(22) Date of filing: 03.11.1999
(51) Int. Cl.: F26B 15/20, F26B 15/14, F26B 15/22, A23B 7/02

(54) **Drying tunnel for fruit and vegetables**
Tunnel zur Trocknung von Obst und Gemüse
Tunnel pour sécher des fruits et des légumes

(43) Date of publication of application: 09.05.2001
(73) Proprietor: FOOD MACHINERY ESPANOLA S.A., E-46012 Valencia (ES)
(72) Inventor: Ramon de Gracia, Antonio, 46012 Valencia (ES)
(74) Representative: Flaccus, Rolf-Dieter, Dr.

(56) References cited:
- EP-A- 0 510 342
- CH-A- 323 335
- DE-A- 1 729 485
- FR-A- 937 204
- FR-A- 2 406 174
- FR-A- 2 668 034
- GB-A- 1 001 808

## Description

### 1 - OBJECT.

The object of the present invention is a "Drying tunnel for fruit and vegetables".

The tunnel, arranged with the fruit or vegetables travelling vertically, works with fresh fruit and vegetables and is designed to eliminate the surface moisture they retain after undergoing the pre-packing operations (washing, polishing).

### 2 - PRIOR ART.

Drying tunnels are known in the prior art of handling fruit and vegetables to improve their market presentation in which the fruit and vegetables move forward on horizontally arranged roller conveyors, whilst they are rubbed by a mass of hot air forced to flow upstream. A drying tunnel for tea leaves is known from GB-A-1 001 808.

Where airflow and temperature are the same, process efficiency depends on the length of the contact between the mass of gas and the fruit or vegetables and therefore, in conclusion, on the tunnel length.

This constraint is sometimes difficult to satisfy, given the limited plan surface available at handling warehouses.

### 3 - DESCRIPTION OF THE INVENTION

The invention subject of this Patent is designed to overcome the drawback typical of known horizontal drying tunnels described above.

It is therefore designed as a prismatic rectangular box which is internally divided by parallel equidistant vertical walls into preferably identical compartments with a bucket conveyor travelling successively up and down as a continuous chain, arranged so that the compartments each contain a conveyor sector moving in a direction opposite that in which the adjacent compartment is travelling.

The buckets are elongate and their horizontal axis lies parallel to the compartment walls, their ends each being limited by irregular hexagonal plates, swivel hinge pin sectors being located close to each of their top comers, ideally in line, joined to the respective chains driving the conveyor.

The bottom of the bucket that is to hold the fruit whilst it is conveyed within the tunnel is arranged within the concavity defined by the three bottom comers of the end hexagonal walls, made in such a way as to allow an airflow through it (for instance, spaced longitudinal rods, perforated plate, etc.).

Short shafts are arranged projecting from the bucket at each of the top inner comers of said hexagonal walls, their free ends each provided with bearing means (bearings for instance) which, in the last downward sector of the conveyor, abut against flat symmetrical guides with a downward incline, causing the bucket to swivel upon abutting thereon, thereby for it to be tipped and emptied, allowing the fruit it held and conveyed to leave the tunnel.

The height at which the fruit exits may be optionally chosen by adjusting the position of the flat tipping guide, which may move vertically along a C section, being fixed thereto at the desired position.

The top of the general prismatic rectangular box of the tunnel has conventional means for heating and forcing the flow of the drying air mass, and a motor driving the inner conveyor.

The drying tunnel designed with the above-mentioned structural, formal and functional characteristics provides a number of advantages over known tunnels travelling horizontally, for instance as follows:
a) - Less plan surface area is taken up, with the same length of travel of the fruit inside the tunnel, or even with a greater length.
b) - Total contact of the airflow with the fruit, sweeping its upper face in the upward sectors of the conveyor and its lower face through the bottom of the buckets in the downward sectors thereof, and consequently making operation more efficient.
c) - Adjustment of the height at which the fruit exits, fixing it as appropriate to facilitate the subsequent handling thereof.
d) - A rational replacement of air losses by optionally fitting a moisture control sensor which may, through electronic means, provide for the adjustment of the airflow entering from outside in order to be as strictly required to keep the physical constants at their optimum values.

### 4 - BRIEF DESCRIPTION OF THE DRAWINGS.

In order for the description of the invention to be complete and for its formal, structural and functional characteristics to be more easily understood, a number of drawings are attached schematically showing various features of a preferred embodiment of the drying tunnel for fruit and vegetables subject of the present Letters Patent.

In the drawings:

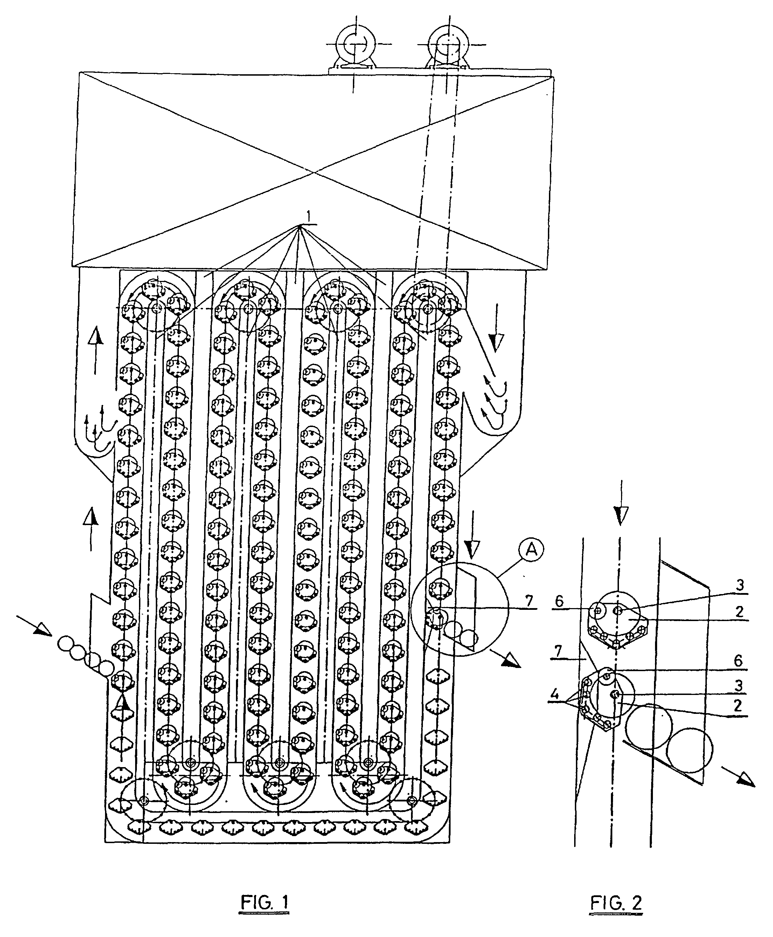

- Figure 1 is a side elevation view of the drying tunnel, with the front enclosing plate removed to show its internal characteristics.
- Figure 2 is an enlargement of detail A relating to the bucket swivelling, tipping and emptying system for the fruit to leave the inside of the tunnel.

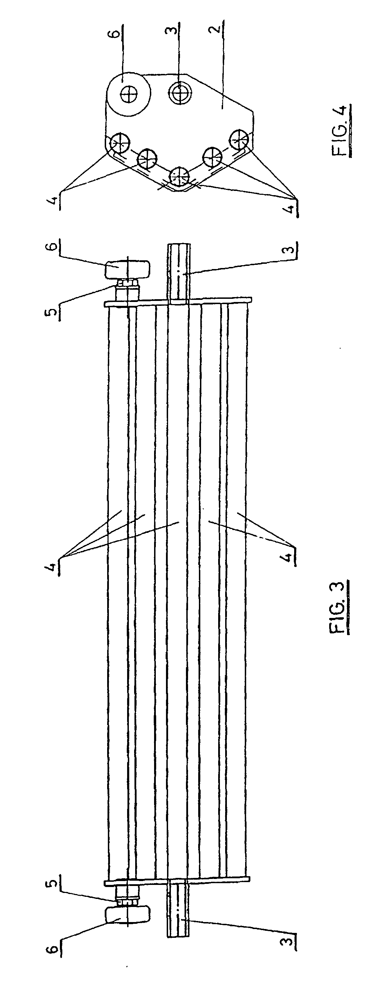

- Figure 3 is a plan view of a bucket and Figure 4 a side view thereof.

### 5 - DESCRIPTION OF A PREFERRED EMBODIMENT

In order to clearly show the nature and scope of advantageous application of the drying tunnel for fruit and vegetables subject of the invention, its structure and operation will now be described with reference to the drawings, which represent a preferred embodiment of said object for informative purposes and should therefore be construed in the broadest sense and not so to limit the application and contents of the invention.

The drying tunnel is shaped as a prismatic rectangular box which is internally divided by parallel equidistant vertical walls (1) into preferably identical compartments with a bucket conveyor travelling successively up and down as a continuous chain, arranged so that the compartments each contain a conveyor sector moving in a direction opposite that in which the adjacent compartment is travelling.

The buckets are elongate and their horizontal axis lies parallel to the compartment walls (1), their ends each being limited by irregular hexagonal plates (2), swivel hinge pin sectors (3) being located close to each of their top corners, ideally in line, joined to the respective chains driving the conveyor.

The bottom of the bucket is arranged within the concavity defined by the three bottom corners of the end hexagonal walls (2), made in such a way as to allow an airflow through it, with spaced longitudinal rods (4).

Short shafts (5) are each arranged projecting from the bucket at the top inner corner of each end wall (2) of the buckets, their free ends each provided with bearing means (bearings (6) for instance) which, in the last downward sector of the conveyor, abut against flat symmetrical guides (7) with a downward incline, causing the bucket to swivel upon abutting thereon, thereby for it to be tipped and emptied, allowing the fruit it held and conveyed to leave the tunnel.

The height at which the fruit exits may be chosen by adjusting the position of the tipping guide (7), moving it vertically along a C section, to which it may be fixed at the desired position.

## Claims

1. A drying tunnel for fruit and vegetables, **characterised in that** it is shaped as a prismatic rectangular box which is internally divided by vertical spacing walls (1) into successive compartments with a bucket conveyor travelling successively up and down as a continuous chain, arranged so that the compartments each contain a conveyor sector moving in a direction opposite that in which the conveyor sector in the adjacent compartment is travelling.

2. A drying tunnel for fruit and vegetables, as in claim 1, **characterised in that** the buckets are elongate and their horizontal axis lies parallel to the compartment walls (1), their ends each being limited by irregular hexagonal plates (2), swivel hinge pin sectors (3) being located close to each of their top corners, ideally in line, joined to the respective chains driving the conveyor; whereas the bottom of the bucket is arranged within the concavity defined by the three bottom comers of the end hexagonal plates (2), made in such a way as to allow an airflow through it, with spaced longitudinal rods (4).

3. A drying tunnel for fruit and vegetables, as in the preceding claims, **characterised in that** short shafts (5) are each arranged projecting from the bucket at the top inner comer of each end plate (2) of the buckets, their free ends each provided with bearing means (6) which, in the last downward sector of the conveyor, abut against flat symmetrical guides (7) with a downward incline, causing the bucket to swivel upon abutting thereon, thereby for it to be tipped and emptied, allowing the fruit it held and conveyed to leave the tunnel, the height at which the fruit exits being chosen by adjusting the position of the tipping guides(7), moving them vertically along a C section, to which they may be fixed at the desired position.

## Patentansprüche

1. Trockenkanal für Obst und Gemüse, **dadurch gekennzeichnet, dass** er als ein prismatischer, rechteckiger Kasten ausgestaltet ist, der innen durch vertikale Begrenzungswände (1) in aufeinander folgende Kompartimente unterteilt ist, mit einem Behälterbandförderer, der als Endloskette sukzessive auf und ab läuft, in einer derartigen Anordnung, dass sich in jedem Kompartiment ein Förderabschnitt befindet, der sich in die entgegengesetzte Richtung zu derjenigen, in die der Förderabschnitt im benachbarten Fach läuft, bewegt.

2. Trockenkanal für Obst und Gemüse nach Anspruch 1, **dadurch gekennzeichnet, dass** die Behälter länglich sind und ihre horizontale Achse parallel zu den Kompartimentwänden (1) verläuft, wobei jedes der Enden der Behälter durch eine unregelmäßige, hexagonale Platte (2) begrenzt ist und Drehgelenkzapfen-Abschnitte (3) in der Nähe jeder der oberen Ecken der Behälter, idealer Weise in gerader Linie, angeordnet und mit den jeweiligen, den Förderer antreibenden Ketten verbunden sind, während der untere Teil des Behälters in der durch die drei unteren Ecken der hexagonalen Endplatten (2) definierten Höhlung angeordnet und derart mit voneinander beabstandeten länglichen Stäben (4) ausgestaltet ist, dass ein Luftstrom durch diesen hindurch fließen kann.

3. Trockenkanal für Obst und Gemüse nach den vorangehenden Ansprüchen, **dadurch gekennzeichnet, dass** kurze Achsen (5) jeweils so angeordnet sind, dass sie an der oberen, inneren Ecke einer jeden Endplatte (2) der Behälter von dem Behälter hervorstehen, wobei ihre freien Enden jeweils mit einer Lagervorrichtung versehen sind, die in dem letzten, nach unten führenden Abschnitt des Förderers an flache, symmetrische Führungen (7), die eine abwärts gerichtete Schräge aufweisen, anstoßen und eine Schwenkbewegung des Behälters beim Auftreffen auf die Schräge verursachen, wodurch dieser gekippt und gelehrt wird, so dass das im Behälter enthaltene und beförderte Obst den Trockenkanal verlassen kann, wobei die Höhe, bei welcher das Obst austritt, durch Einstellen der Position der Kippführungen (7) gewählt wird, indem diese vertikal entlang eines C-Abschnittes, an welchem die Führungen in der gewünschten Position befestigt werden können, bewegt werden.

## Revendications

1. Tunnel pour sécher des fruits et des légumes, **caractérisé en ce qu'**il est formé comme une boîte rectangulaire prismatique qui est divisée intérieurement par des parois d'espacement verticales (1) en compartiments successifs avec un transporteur à godets se déplaçant successivement vers le haut et vers le bas comme une chaîne continue, disposé de telle sorte que les compartiments contiennent chacun un secteur de transporteur se déplaçant dans une direction opposée à celle dans laquelle le secteur de transporteur dans le compartiment adjacent se déplace.

2. Tunnel pour sécher des fruits et des légumes selon la revendication 1, **caractérisé en ce que** les godets sont allongés et leur axe horizontal est parallèle aux parois de compartiments (1), leurs extrémités étant chacune limitées par des plaques hexagonales irrégulières (2), des secteurs d'axe d'articulation (3) étant placés à proximité de chacun de leurs angles supérieurs, idéalement en ligne, reliés aux chaînes respectives entraînant le transporteur ; tandis que le fond du godet est disposé à l'intérieur de la concavité définie par les trois angles inférieurs des plaques hexagonales d'extrémité (2), construites de manière à permettre un écoulement d'air à travers le godet, avec des tiges longitudinales espacées (4).

3. Tunnel pour sécher des fruits et des légumes selon les revendications précédentes, **caractérisé en ce que** des arbres courts (5) sont chacun disposés dépassant du godet à l'angle interne supérieur de chaque plaque (2) des godets, leurs extrémités libres étant chacune équipées de moyens de paliers (6) qui, dans le dernier secteur vers le bas du transporteur, s'appuient contre des guides symétriques plats (7) avec une inclinaison vers l'arrière, causant le pivotement du godet sur le point d'articulation, pour qu'il soit ainsi basculé et vidé, permettant au fruit qu'il maintient et transporte de laisser le tunnel, la hauteur à laquelle le fruit sort étant définie en ajustant la position des guides de basculement (7) les déplaçant verticalement le long d'une section C, à laquelle ils peuvent être fixés à la position désirée.
